(19) Europäisches Patentamt

European Patent Office

Office européen des brevets

(11) Publication number: **0 346 589 B1**

(12) **EUROPEAN PATENT SPECIFICATION**

(45) Date of publication of patent specification :
11.12.91 Bulletin 91/50

(51) Int. Cl.⁵: **G01B 11/14, G01B 11/02**

(21) Application number: **89106859.5**

(22) Date of filing: **17.04.89**

(54) **Optical position sensor.**

(30) Priority: **21.04.88 IT 2027088**

(43) Date of publication of application:
**20.12.89 Bulletin 89/51**

(45) Publication of the grant of the patent:
**11.12.91 Bulletin 91/50**

(84) Designated Contracting States:
**DE ES FR GB**

(56) References cited:
**EP-A- 0 250 354**
**EP-A- 0 291 394**
**GB-A- 2 077 421**
**GB-A- 2 183 827**
**US-A- 4 666 304**
**US-A- 4 711 578**

(73) Proprietor: **PIRELLI CAVI S.p.A.**
**Piazzale Cadorna, 5**
**I-20123 Milan (IT)**

(72) Inventor: **Boero, Paolo**
**Via Parini 5/A**
**Milan (IT)**

(74) Representative: **Giannesi, Pier Giovanni et al**
**Pirelli S.p.A. Direzione Brevetti Piazzale**
**Cadorna, 5**
**I-20123 Milano (IT)**

EP 0 346 589 B1

## Description

The present invention refers to an optical position sensor and more particularly it relates to an optical sensor able to measure the position of a moving body with respect to a fixed reference element, said moving body and said fixed reference element being remote from the generator of the local optical signal, in which the displacement of the remote moving body is converted into a phase variation of the optical signal transmitted to the remote area through an optical fiber.

As known, there are apparatuses which — for their operation — require a determination of the displacement of moving bodies with respect to fixed reference elements situated in zones distant from the apparatus and in environments where the atmospheric conditions are severe and changeable. For instance, the central control unit of an aircraft, situated in the pilot compartment, must know the position of the ailerons and it is evident that the environmental conditions around the aircraft, such as temperature, pressure, humidity and so on, may be extremely variable.

It is also known that the most reliable instruments to measure such displacements are those of the optical type which, besides being simple and compact, show a low attenuation of the signal and immunity to electro-magnetic disturbances.

Further, optical position sensors are known, which make use of a local, amplitude modulated monochromatic light source which, through an optical fiber, is conveyed to the remote area comprising the moving body whose position is to be determined. In said sensors, the modulated light outcomes from the free end of the optical fiber, strikes against the surface of the moving body and is again reflected into the optical fiber.

In this way the light reflected by the moving body is phase displaced by an angle which is proportional to the distance between the moving body and the end of the optical fiber. The phase displaced light runs through the optical fiber again and is locally compared to the modulating signal. In this way the phase displacement of the reflected light with respect to the modulating signal, and therefore the position of the moving body, is determined.

The above described optical sensors show the substantial drawback that the phase displacement measured between the reflected light and the modulating signal does not represent only the position of the remote moving body, but also involves all of the improper phase variations induced by the environmental conditions where the optical fiber is operating.

In fact, such variations in temperature, pressure, humidity and so on, together with the length of the optical fiber, which can reach some tens of meters, induce variations in the transmission characteristics of the optical fiber, which result in improper phase displacement of the optical signal. In particular, when the displacements to be measured are very small, of the order of some tens of microns, the false phase displacements induced by the ambient may distort the measure of the position of the remote body.

Consequently, it is the aim of the present invention to overcome the above indicated disadvantages and to provide an optical sensor able to determine the position of a remote moving body, in which the false phase variations induced by the variations of the environmental conditions where the optical fiber operates, are compensated.

To achieve said aim, the object of the present invention is an optical position sensor, which comprises :

— a generator for generating an optical monochromatic measure signal,

— a modulator for the amplitude modulation of said optical measure signal by a radio-frequency electric signal,

— an optical fiber for the transmission of the optical measure signal to a remote area and the reception of the reflected optical measure signal from the remote area,

— a device positioned in the remote area for the conversion of the position of a moving body positioned in the remote area, with respect to a fixed reference element positioned in the remote area, into said reflected optical measure signal,

— a device for the conversion of the optical measure reflected signal into an electric measure signal having a frequency equal to the frequency of the modulation electric signal, and

— a phase comparator, characterized in that it further comprises :

—— a second generator for generating an optical monochromatic reference signal having a wave length different from that of the optical measure signal, also said reference signal being amplitude modulated by said radio-frequency electric signal and being conveyed by said optical fiber, and

—— a second device for the conversion of said reflected optical reference signal into an electric reference signal having a frequency equal to that of the modulation electric signal, said phase comparator comparing the phases of said electric measure signal with said electric reference signal, and in that said fixed reference element comprises an optical filter which allows the passage of said optical measure signal and reflects said optical reference signal.

In a preferred embodiment of the invention, the fixed reference element is represented by a semi-reflecting mirror. In a further preferred embodiment the reflected optical signals are separated from the transmitted optical signals by means of a directional coupler and the reflected optical signals are separated from one another by means of two semi-reflecting mirrors.

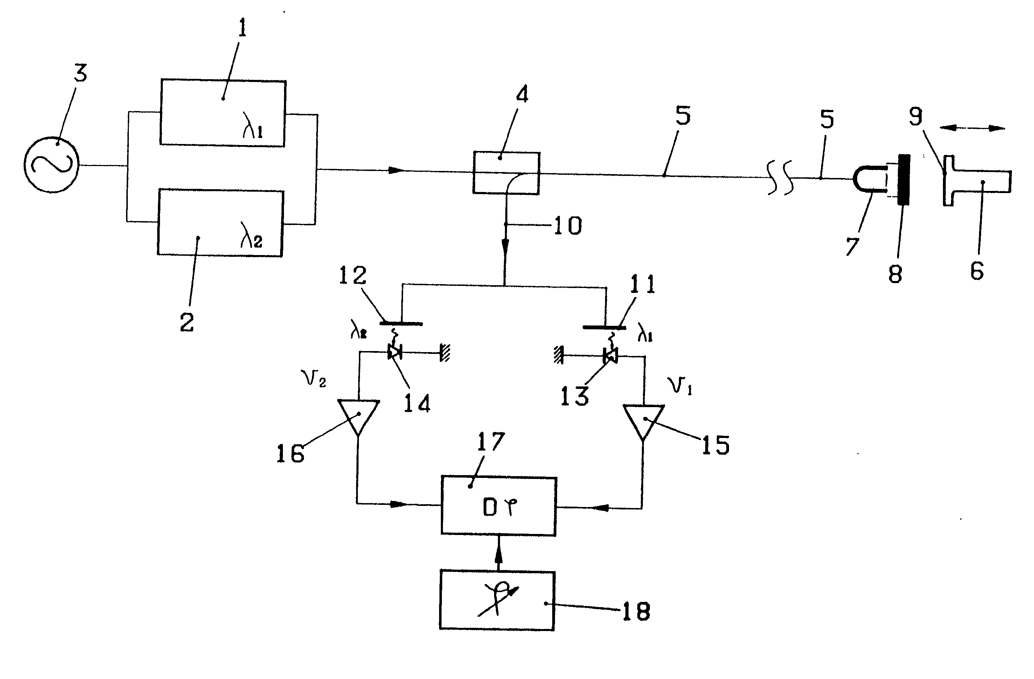

Further aims and advantages of the present invention will be more clearly apparent from the following detailed description and by the appended drawing, given only by way of non-limiting example, which represents a general diagram of the optical position sensor forming the object of the invention.

The diagram illustrates a source 1 of monochromatic light having a wave length $\lambda_1$, which generates a so-called "reference" optical signal, and a source 2 of monochromatic light, having a wave length $\lambda_2$ which generates a so-called "measure" optical signal. The meaning of such terms will be more clearly understood in the course of the description.

The optical measure signal $S_2$ and the optical reference signal $S_1$ are amplitude modulated by an IGHz radio-frequency electric signal generated by a modulator 3. The measure signal $S_2$ and the reference signal $S_1$, amplitude modulated, are sent to a same input of a directional coupler 4. An optical fiber 5 outcomes from an output of the directional coupler 4 ; said fiber extends as far as a remote area where is situated a moving body 6 whose displacements are to be measured.

To the free end of the optical fiber is connected a lens 7, used to focalize the light beam coming from the optical fiber 5, and a semi-reflecting mirror 8, which acts as an optical filter, allowing the full passage of the optical measure signal $S_2$ and reflecting completely the optical reference signal $S_1$.

The moving body 6 has a surface 9, facing the semi-reflecting mirror 8, which reflects light in a complete manner.

An optical fiber 10, to which are connected two semi-reflecting mirrors 11 and 12, departs from another output of the directional coupler 4. The semi-reflecting mirror 11 acts as an optical filter, allowing the full passage of the optical reference signal $S_1$ and blocking completely the optical measure signal $S_2$. Analogously, the semi-reflecting mirror 12 acts as an optical filter, allowing the full passage of the optical measure signal $S_2$ and blocking completely the reference signal $S_1$.

Two photodiodes 13 and 14 are respectively facing the semi-reflecting mirrors 11 and 12 ; they convert the optical signals into electric signals. The electric signals coming from the two photodiodes 13 and 14 are respectively amplified by two operational amplifiers 15 and 16 and are then sent to the two inputs of a phase comparator 17. A variable phase shifter 18 is also connected to the phase comparator 17.

In operation, the amplitude modulated measure signal $S_2$ and reference signal $S_1$ pass through the directional coupler 4 without being attenuated and, after having run through the optical fiber 5 along its whole length, reach the remote area where the semi-reflecting mirror 8 acts as a fixed reference for the moving body 6. The optical reference signal $S_1$ is completely reflected by mirror 8 and is therefore reflected exactly on the fixed reference. On the contrary, the optical measure signal $S_2$ passes completely through mirror 8, strikes against the reflecting facing surface 9 of the moving body 6 and goes again on mirror 8, wherefrom — through the focusing lens 7 — re-enters the optical fiber 5.

In this to-and-from travel with respect to the fixed reference element 8, the optical measure signal $S_2$ suffers a phase displacement with respect to the optical reference signal $S_1$, which is proportional to the distance existing between the same fixed reference element 8 and the facing surface of the moving body 6. Consequently, the phase displacement between the reference signal $S_1$ and the measure signal $S_2$ represents the distance of the moving body from the fixed reference 8.

The reflected optical signals, namely the reference signal $S_1'$, and the measure signal $S_2'$, phase shifted with respect to the reference signal, run through the whole optical fiber again to reach the directional coupler 4 where they are deviated on the optical fiber 10. The semi-reflecting mirrors 11 and 12 separate the two reflected optical signals $S_1'$ and $S_2'$, allowing the only passage of the measure signal $S_2'$ and the reference signal $S_1'$, respectively.

Photodiodes 13 and 14 convert the reflected optical reference signal $S_1'$ and measure signal $S_2'$ into two electric signals $v_1$ and $v_2$, which have the same frequency as the modulating electric signal and which maintain the same phase relation of the reflected optical signals ; the operational amplifiers 15 and 16 amplify the electric signals $v_1$ and $v_2$ and at last the phase comparator 17 measures the phase displacement existing between the two electric signals $v_1$ and $v_2$, which represents the distance of the moving body 6 from the fixed reference 8.

The variable phase shifter 18 has the task of calibrating the phase comparator 17. A signal indicating said distance might then start from the phase comparator 17 to reach a circuit controlling the position of the moving body 6.

The above described sensor is able to determine the axial position of a moving body with respect to a fixed reference ; moreover, by simple modifications, it can also determine the angular position of a revolving shaft.

From the foregoing description it is clear that the optical sensor forming the object of the present invention reaches the aim to compensate the false phase variations induced on the optical signal measuring the position of the moving body by the variations in the environmental conditions. In fact, when these variations take place, the optical fiber changes its transmission characteristics and induces exactly the same phase displacements on both the modulated optical measure and reference signals, so that their phase difference is always and solely that due to the position of the moving body.

In other words, in the conventional optical sensors the reference signal is represented by the electric signal of the modulator and remains "in loco", whilst the optical signal which measures the position of the moving body, travelling along the optical fiber, is influenced by the improper phase variations ; on the contrary, in the optical sensor according to the present invention, an optical reference signal is generated which, travelling together with the optical signal which measures the position of the moving body, suffers the same improperphase variations suffered by said measure signal so that, when the phase difference is effected, these improperphase displacements are compensated and therefore eliminated.

## Claims

1. An optical position sensor, which comprises :
— a generator for generating an optical monochromatic measure signal ($S_2$),
— a modulator for the amplitude modulation of said optical measure signal ($S_2$) by a radio-frequency electric signal,
— an optical fiber for the transmission of the optical measure signal ($S_2$) to a remote area and for the reception of the reflected optical measure signal ($S_2'$) from the remote area,
— a device positioned in the remote area for the conversion of the position of a moving body positioned in the remote area, with respect to a fixed reference element positioned in the remote area, into said reflected optical measure signal ($S_2'$),
— a device for the conversion of the reflected optical measure signal ($S_2'$) into an electric measure signal ($V_2$) having, a frequency equal to the frequency of the modulation electric signal, and
— a phase comparator, characterized in that it further comprises :
— a second generator (1) for generating an optical monochromatic reference signal ($S_1$) having a wave length ($\lambda_1$) different from that ($\lambda_2$) of the optical measure signal ($S_2$), also said reference signal ($S_1$) being amplitude modulated by said radio-frequency electric signal and being conveyed by said optical fiber (5), and
— a second device (13) for the conversion of said reflected optical reference signal ($S_1'$) into an electric reference signal ($v_1$) having a frequency equal to that of the modulation electric signal, said phase comparator (17) comparing the phases of said electric measure signal ($v_2$) with saidelectric reference signal ($v_1$),
and in that said fixed reference element comprises an optical filter (8) which allows the passage of said optical measure signal ($S_2$) and reflects said optical reference signal ($S_1$).

2. An optical sensor as in claim 1, characterized in that said fixed reference element comprises a focusing lens (7).

3. An optical sensor as in claim 1, characterized in that said moving body (6) has a surface (9) facing said fixed reference element and reflecting light.

4. An optical sensor as in claim 1, characterized in that it comprises a directional coupler (4) which separates said transmitted optical signals ($S_1$, $S_2$) from said reflected optical signals ($S_1'$, $S_2'$) and conveys them on a second and a third optical filter (11, 12), which separate said reflected optical measure signal ($S_2'$) from said reflected optical reference signal ($S_1'$).

5. An optical sensor as in claims 1 and 4, characterized in that said optical filters (11, 12) are light semi-reflecting mirrors.

6. An optical sensor as in claim 1, characterized in that it comprises a first amplifier (15) and a second amplifier (16) which amplify said electric measure signal ($v_2$) and said electric reference signal ($v_1$).

7. An optical sensor as in claim 6, characterized in that said phase comparator (17) is connected between the outputs of said first (15) and second (16) amplifier.

8. An optical sensor as in claim 7, characterized in that it comprises a variable phase shifter (18) connected to said phase comparator (17) for the calibration of the latter.

## Patentansprüche

1. Optischer Positionssensor, umfassend :
— einen Generator zum Erzeugen eines optischen monochromatischen Messignals ($S_2$),
— einen Modulator für Amplitudenmodulation des optischen Messsignals ($S_2$) durch ein elektrisches Hochfrequenzsignal,
— eine optische Faser für das Übertragen des optischen Messsignals ($S_2$) zu einem entfernt liegenden Bereich und für das Empfangen des von dem entfernt liegenden Bereich reflektierten optischen Messignals ($S_2'$),
— eine in dem entfernt liegenden Bereich angeordnete Einrichtung für das Umwandeln der Position eines in dem entfernt liegenden Bereich angeordneten sich bewegenden Körpers mit Bezug auf ein in dem entfernt liegenden Bereich angeordnetes ortsfestes Bezugselement, in das reflektierte optische Messignal ($S_2'$),
— eine Einrichtung für das Umwandeln des reflektierten optischen Messignals ($S_2'$) in ein elektrisches Messignal ($v_2$), welches eine Frequenz hat, die gleich der Frequenz des elektrischen Modulationssignales ist und

— einen Phasenvergleicher, **dadurch gekennzeichnet,** daß der Sensor weiterhin umfaßt :

— einen zweiten Generator (1) zum Erzeugen eines optischen Mono- chromatischen Bezugssi-gnals ($S_1$), welches eine Wellenlänge ($\lambda_1$).hat, die von der Wellenlänge ($\lambda_2$) des optischen Messi-gnals ($S_2$) verschieden ist, auch das Bezugssi-gnal ($S_1$) durch das elektrische Hochfrequenzsignal amplitudenmoduliert und durch die optische Faser (5) übertragen wird, und

— eine zweite Einrichtung (13) für das Umwandeln des reflektierten optischen Bezugssignals ($S_1'$) in ein elektrisches Bezugssignal ($v_1$), wel-ches eine Frequenz hat, die gleich derjenigen des elektischen Modulationssignals ist, wobei der Phasenvergleicher (17) die Phasen des elektri-schen Messignals ($v_2$) mit dem elektrischen Bezugssignal ($v_1$) vergleicht, und

das ortsfeste Bezugselement einen optischen Filter (8) aufweist, der den Durchgang des opti-schen Messignals ($S_2$) ermöglicht und das optische Bezugssignal ($S_1$) reflektiert.

2. Optischer Sensor nach Anspruch 1, dadurch gekennzeichnet, daß das ortsfeste Bezugselement eine Fokussierlinse (7) aufweist.

3. Optischer Sensor nach Anspruch 1, dadurch gekennzeichnet, daß der sich bewegende Körper (6) eine Fläche (9) hat, die dem ortsfesten Bezugselement zugewandt ist und Licht reflektiert.

4. Optischer Sensor nach Anspruch 1, dadurch gekennzeichnet, daß er einen Richtkoppler (4) aufweist, der die übertragenen optischen Signale ($S_1,S_2$) von den reflektierten optischea Signalen ($S_1',S_2'$) trennt und diese zu einem zweiten und einem dritten optischen Filter (11, 12) richtet, welche das reflek-tierte optische Messignal ($S_2'$) von dem reflektierten optischen Bezugssignal ($S_1'$) trennen.

5. Optischer Sensor nach den Ansprüchen 1 und 4, dadurch gekennzeichnet, daß die optischen Filter (11,12) für Licht halbdurchlässige Spiegel sind.

6. Optischer Sensor nach Anspruch 1, dadurch gekennzeichnet, daß er einen ersten Verstärker (15) und einen zweiten Verstärker (16) aufweist, welche das elektrische Messignal ($v_2$) und das elektrische Bezugssignal ($v_1$) verstärken.

7. Optischer Sensor nach Anspruch 6, dadurch gekennzeichnet, daß der Phasenvergleicher (17) zwischen den Ausgang des ersten (15) und den Ausgang des zweiten (16) Verstärkers geschaltet ist.

8. Optischer Sensor nach Anspruch 7, dadurch gekennzeichnet, daß er einen variablen Phasenschieber (18) aufweist, der für Eichung des Phasenvergleichers (17) mit diesem verbunden ist.

## Revendications

1. Capteur optique de position, qui comprend :

— un générateur servant à produire un signal de mesure optique monochromatique ($S_2$),

— un module servant à moduler l'amplitude dudit signal de mesure optique ($S_2$) par un signal élec-trique à haute fréquence,

— une fibre optique pour l'émission du signal de mesure optique ($S_2$) en direction d'une zone distante et pour la réception du signal de mesure optique réfléchi ($S_2'$) à partir de la zone distante,

— un dispositif situé dans la zone distante pour la conversion de la position d'un corps mobile positionné dans la zone distante, par rapport à un élément de référence fixe positionné dans la zone distante, entre ledit signal de mesure optique réfléchi ($S_2'$),

— un dispositif pour la conversion du signal de mesure optique réfléchi ($S_2'$) en un signal de mesure électrique ($V_2$) possédant une fréquence égale à la fréquence du signal électrique de modulation, et

— un comparateur de phase caractérisé en ce qu'il comporte en outre :

— un second générateur (1) pour produire un signal de référence optique monochromatique ($S_1$) possédant une longueur d'onde ($\lambda_1$) diffé-rente de la longueur d'onde ($\lambda_2$) du signal de mesure optique ($S_2$), ledit signal de référence ($S_1$) possédant également une amplitude modulée par ledit signal électrique à haute fréquence et étant transmis par ladite fibre optique (5), et

— un second dispositif (13) pour la conversion dudit signal de référence optique réfléchi ($S_1'$) en un signal de référence électrique ($v_1$) possédant une fréquence égale à celle du signal électrique de modulation, ledit comparateur de phase (17) comparant les phases dudit signal de mesure électrique ($v_2$) et dudit signal électrique de réfé-rence ($v_1$), et

— en ce que ledit élément de référence fixe comprend un filtre optique (8) qui permet le passage dudit signal de mesure optique ($S_2$) et réflé-chit ledit signal de référence optique ($S_1$).

2. Capteur optique selon la revendication 1, caractérisé en ce que ledit élément de référence fixe comprend une lentille de focalisation (7).

3. Capteur optique selon la revendication 1, caractérisé en ce que ledit corps mobile (6) possède une surface (9) tournée vers ledit élément de référence fixe et réfléchissant la lumière.

4. Capteur optique selon la revendication 1, caractérisé en ce qu'il comprend un coupleur directionnel (4) qui sépare lesdits signaux optiques émis ($S_1,S_2$) desdits signaux optiques réfléchis ($S_1',S_2'$) et les envoie à des second et troisième filtres optiques (11, 12), qui séparent ledit signal de mesure optique réfléchi ($S_2'$) dudit signal optique de référence réfléchi ($S_1'$).

5. Capteur optique selon les revendications 1 et 4, caractérisé en ce que lesdits filtres optiques (11, 12) sont des miroirs semi-réfléchissants pour la lumière.

6. Capteur optique selon la revendication 1, caractérisé en ce qu'il comprend un premier amplificateur (15) et un second amplificateur (16), qui amplifient ledit signal de mesure électrique ($v_2$) et ledit signal de référence électrique ($v_1$).

7. Capteur optique selon la revendication 6, caractérisé en ce que ledit comparateur de phase (17) est branché entre les sorties dudit premier amplificateur (15) et dudit second amplificateur (16).

8. Capteur optique selon la revendication 7, caractérisé en ce qu'il comprend un dispositif (18) réalisant un déphasage variable, raccordé audit comparateur de phase (17) pour le calibrage de ce comparateur.

EP 0 346 589 B1